# NEUE EUROPÄISCHE PATENTSCHRIFT

(11) **EP 0 393 011 B2**
(45) Veröffentlichungstag und Bekanntmachung des Hinweises auf die Entscheidung über den Einspruch: **13.10.1999**
(45) Hinweis auf die Patenterteilung: 04.05.1994
(21) Anmeldenummer: 90890076.4
(22) Anmeldetag: 15.03.1990
(51) Int. Cl.: F16D 65/12, F16D 23/04

(54) **Verfahren zum Herstellen eines Reibringes für Kupplungen oder Bremsen mit einem gesinterten Reibbelag**
Procedure for making a friction ring for clutches or brakes with a sintered friction lining
Procédé pour produire un anneau de friction pour des embrayages ou des freins avec une garniture de friction frittée

(30) Priorität: 30.03.1989 AT 73889
(43) Veröffentlichungstag der Anmeldung: 17.10.1990
(73) Patentinhaber: Miba Sintermetall Aktiengesellschaft, A-4663 Laakirchen (AT)
(72) Erfinder: Gramberger, Johann, A-4902 Wolfsegg (AT); Roitner, Franz, A-4663 Laakirchen (AT)
(74) Vertreter: Hübscher, Heiner, Dipl.-Ing.

(56) Entgegenhaltungen:
- EP-A- 0 280 201
- EP-A- 0 292 468
- AT-A- 385 826
- SLV-Bericht Nr. 4898/89 "Untersuchung von gebrochenen Synchronringen"
- Zeitschrift: "Werkstatt und Betrieb" 10/81, Heft 10; Lagebericht"Werkstück-Richten durch Umformen"

## Beschreibung

Die Erfindung bezieht sich auf ein Verfahren zum Herstellen eines Reibringes für Kupplungen oder Bremsen mit einem gesinterten Reibbelag auf wenigstens einer Umfangsfläche eines konischen oder zylindrischen Tragringes, der zunächst aus einem ebenen Blech ausgestanzt und mit einem aufgesinterten Reibbelag versehen wird, bevor der besinterte Tragring unter gleichzeitigem Einprägen von über den Umfang verteilten Rillen oder Nuten in den Reibbelag durch ein Prägen bzw. Tefziehen zu einem konischen oder zylindrischen Reibring umgeformt wird.

Um Reibringe für Kupplungen oder Bremsen mit einer zylindrischen oder konischen Reibfläche mit einem unmittelbar auf den Tragring aufgesinterten Reibbelag versehen zu können, ist es bekannt (AT-PS 385 826), den aus einem ebenen Blech ausgestanzten Tragring vor seiner Umformung auf zumindest einer der die späteren konischen oder zylindrischen Umfangsflächen bildenden Seiten mit dem Reibbelag zu besintern und dann erst zwischen der Matrize und dem Stempel eines Umformwerkzeuges in die gewünschte konische oder zylindrische Form zu bringen. Damit bei diesem Umformvorgang der aufgesinterte Reibbelag nicht nachteilig beeinflußt wird, werden am Stempel bzw. an der Matrize des Umformwerkzeuges über den Umfang verteilt Prägeleisten vorgesehen, in deren Bereich zwar der Reibbelag unter einer Ausbildung von Rillen oder Nuten verdichtet wird, nicht aber im Zwischenbereich zwischen den Prägeleisten, so daß die Gefahr einer unerwünschten Verdichtung des Reibbelages beim Umformen des besinterten Tragringes wirkungsvoll begegnet werden kann. Trotz dieser Maßnahme konnten die erforderliche Maßhaltigkeit, insbesondere hinsichtlich der Rundheit und des Rundlaufes, unter Herstellungsbedingungen einer Serienproduktion nicht eingehalten werden. Der üblicherweise aus einem Stahlblech ausgestanzte Tragring wird ja beim Aufsintern des Reibbelages einer Wärmebehandlung unterworfen, die zwangsläufig zu einem die Maßhaltigkeit der nachfolgenden Umformung beeinträchtigenden Festigkeitsverlust führt.

Schließlich ist es bekannt (WO-A-87/06314), einen Reibnng zusammen mit den beiseite aufgebrachten Reibbelägen über die Dicke des Ringes durchgehend wellenartig zu profilieren, so daß im Bereich der Wellentäler, denen auf der jeweils gegenüberliegenden Seite des Reibringes ein Wellenberg entspricht und die eine Tiefe von 0,4 bis 0,8 mm haben sollen, der Ölablauf sichergestellt wird. Nachteilig bei solchen Reibringen ist allerdings, daß aufgrund derwellenartigen Profilierung der Reibflächenanteil auf den Anteil der Ölablaufvertiefungen beschränkt wird.

Der Erfindung liegt somit die Aufgabe zugrunde, ein Verfahren zum Herstellen eines Reibringes der eingangs geschilderten Art mit einfachen Mitteln so zu verbessern, daß eine ausreichende Maßhaltigkeit des umgeformten Tragringes auch unter Herstellungsbedingungen einer Serienproduktion sichergestellt werden kann, ohne ein aufwendiges Nacharbeiten vorsehen zu müssen.

Die Erfindung löst die gestellte Aufgabe durch die Merkmale nach Anspruch 1.

Durch diese einfache Maßnahme, die keinen zusätzlichen Arbeitsschritt erfordert, weil ja die ohnehin vorzusehenden Nuten oder Rillen lediglich tiefer eingeprägt werden müssen, wird das Einhalten enger Toleranzen hinsichtlich der Rundheit und des Rundlaufes ermöglicht, ohne den Reibnng nachbearbeiten zu müssen. Offensichtlich reicht die Kaltverformung beim Einprägen der Rillen oder Nuten in den Tragring aus, die für die Maßhaltigkeit erforderliche Festigkeit des Tragringes wieder herzustellen. Die Tiefe der in den Tragring eingeprägten Rillen oder Nuten muß allerdings nach oben beschränkt werden, damit trotz dieser zusätzlichen Verformung des Tragringes die Rundheit der konischen oder zylindrischen Reibfläche nicht beeinträchtigt wird. Diese Grenze kann mit einer Tiefe der Rillen oder Nuten von 0,1 mm angegeben werden.

Selbstverständlich wirkt sich das Ausmaß der Verformung des Tragringes beim Einprägen der Rillen oder Nuten auf seine Verfestigung und damit auf die Maßhaltigkeit des umgeformten Tragringes aus und kann durch das Ausmaß dieser Verformung beeinflußt werden. Beträgt die Tiefe der in den Tragring eingeprägten Rillen oder Nuten bei einer üblichen Dicke des Tragringes von 2 bis 3 mm wenigstens 0,02 mm, so können bereits für die meisten Anwendungsfälle vorteilhafte Verhältnisse sichergestellt werden.

Neben der Tiefe der in den Tragring eingeprägten Rillen oder Nuten beeinflußt auch deren Anzahl und Verteilung die Verfestigung des Tragringes bei seiner Verformung, wobei sich für das beidseitige Einprägen der Rillen oder Nuten zwei grundsätzliche Möglichkeiten ergeben. Einerseits können die Rillen oder Nuten auf beiden Umfangsflächen des Tragringes einander gegenüberliegen und anderseits in Umfangsrichtung gegeneinander versetzt eingeprägt werden, um unterschiedliche Wirkungen auf den Tragring zu erzielen. Während sich im ersten Fall eine stärkere örtliche Verformung durch die einander gegenüberliegenden Rillen ergibt, wird im zweiten Fall eine gleichmäßigere Verteilung über den Umfang erhalten, und zwar unter einer zusätzlichen Beanspruchung zwischen den einzelnen Rillen oder Nuten.

Wie bereits ausgeführt wurde, ist für das Durchdrücken der Rillen oder Nuten in den Tragring bei dessen Umformung kein zusätzlicher Arbeitsschritt notwendig. Es kann von einem üblichen Umformwerkzeug mit einer Matrize und einem Stempel ausgegangen werden, von welchen Werkzeugteilen zumindest einer vorragende Prägeleisten zur Herstellung von Reibbelagrillen oder Nuten trägt, wobei diese Prägeleisten eine die Reibbelagdlcke übersteigende Höhe aufweisen müssen, um beim Einprägen der Rillen und Nuten in den Reibbelag den Tragring entsprechend diesen Rillen oder Nuten mitzuverformen.

An Hand der Zeichnung wird das erfindungsgemäße Verfahren zur Herstellung eines Reibringes näher erläutert. Es zeigen
- Fig. 1: einen ebenen, beidseitig mit einem Reibbelag versehenen Tragring vor seinem Umformen in einem vergrößerten Querschnitt,
- Fig. 2: einen Axialschnitt durch den umgeformten Reibring,
- Fig. 3: ein Umformwerkzeug zum Umformen des besinterten Tragringes in einem vereinfachten Axialschnitt,
- Fig. 4: den Stempel des Umformwerkzeuges ausschnittsweise in einem Schnitt nach der Linie IV-IV der Fig. 3 in einem größeren Maßstab,
- Fig. 5: einen Schnitt nach der Linie V-V der Fig. 2 in einem größeren Maßstab und
- Fig. 6: eine der Fig. 5 entsprechende Darstellung einer abgewandelten Ausführungsform des Reibringes.

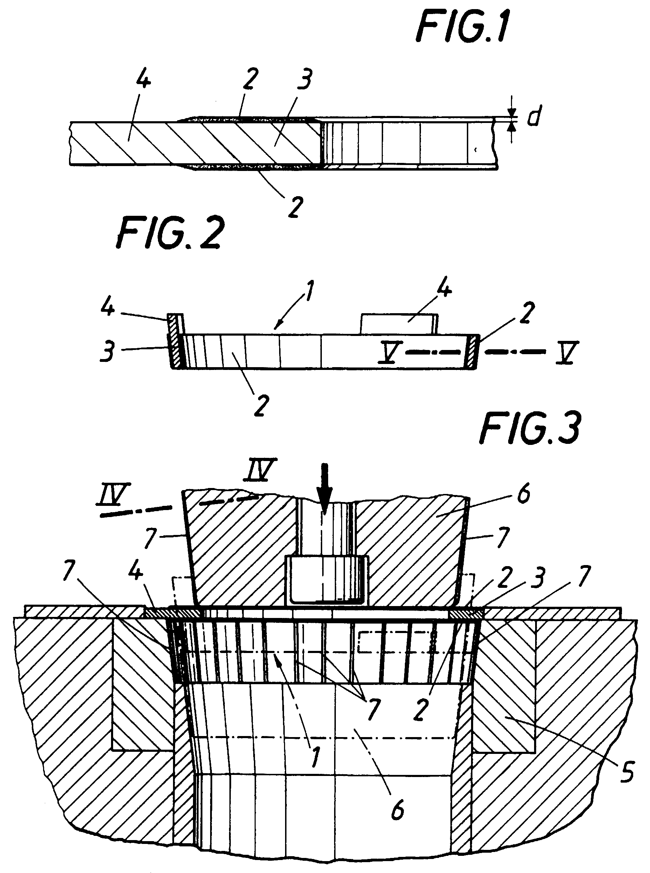

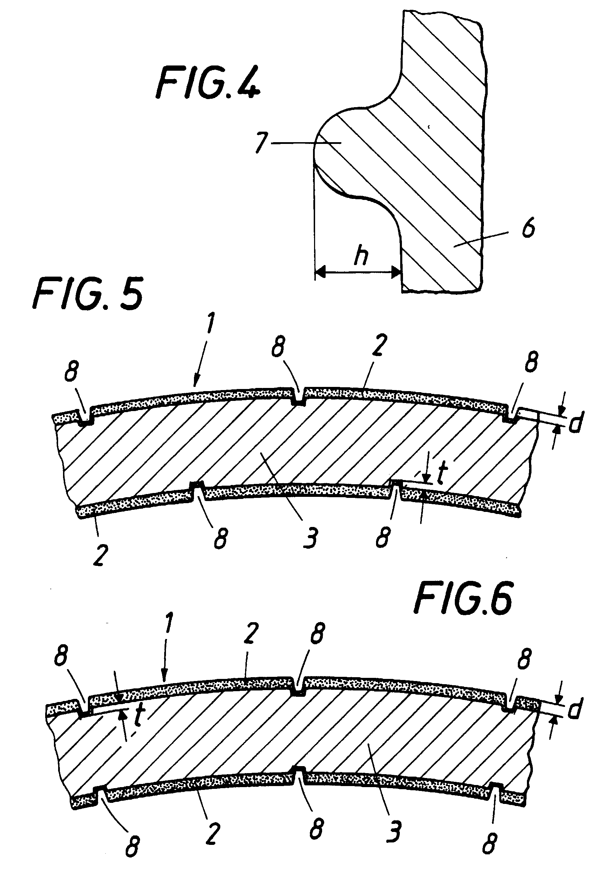

Zum Herstellen eines Reibringes 1 mit einem unmittelbar aufgesinterten Reibbelag 2 wird ein Tragring 3 mit angeformten Nocken 4 für die Mitnahme des in eine Bremse oder Kupplung eingebauten Reibringes 1 aus einem ebenen Stahlblech ausgestanzt und zunächst auf der einen Seite und dann auf der anderen Seite mit einem Streusinter-Reibbelag 2 versehen, wie dies der Fig. 1 entnommen werden kann. Erst nach dem Aufsintern der Reibbeläge 2 wird der Tragring 3 in die für den Reibring 1 erforderliche konische Form gemäß der Fig. 2 durch ein Prägen bzw. Tiefziehen umgeformt, und zwar mit Hilfe eines in Fig. 3 dargestellten Umformwerkzeuges, das im wesentlichen aus einer Matrize 5 und einem mit dieser Matrize 5 zusammenwirkenden Stempel 6 besteht, mit dessen Hilfe der in die Matrize 5 eingelegte, besinterte Tragring 3 aus der Blechebene in die gewünschte konische Form des Reibringes 1 gezogen wird, was in Fig. 3 strichpunktiert eingezeichnet ist. Die beiden Teile 5 und 6 des Umformwerkzeuges sind dabei mit gegen das Werkstück vorragenden Prägeleisten 7 versehen, von denen eine in Fig. 4 größer dargestellt ist. Da diese Prägeleisten 7 eine die Dicke d des Reibbelages 2 übersteigende Höhe h aufweisen, werden die durch diese Prägeleisten 7 beim Ziehvorgang des Tragringes 3 bedingten Rillen oder Nuten 8 nicht nur in den Reibbelag 2, sondern auch unter einer Verformung des Tragringes 3 in diesen eingeprägt, was zu einer Kaltverfestigung des Tragringes 3 und demzufolge zu einer hohen Maßhaltigket des zu einem Konus umgeformten Ringes insbesondere hinsichtlich seiner Rundheit und seines Rundlaufes führt. Die Tiefe t dieser Rillen oder Nuten 8 im Tragring 3 beträgt dabei zwischen 0,02 und 0,1 mm, was unter Berücksichtigung der Schichtstärke des im Bereich der Prägeleisten 7 verdichteten Reibbelages eine entsprechende Höhe h für die Prägeleisten 7 erfordert.

Die Rillen oder Nuten 8, die beim Einsatz des Reibringes zur Ölführung dienen, werden vorzugsweise sowohl auf der äußeren als auch auf der inneren Umfangsseite des konischen Tragringes 3 vorgesehen, obwohl bereits mit dem Einprägen von Rillen oder Nuten in den Tragring auf einer Umfangsseite merkliche Verbesserungen hinsichtlich der Maßhaltigkeit des Reibringes sichergestellt werden können. Bei einem beidseitigen Einprägen von Rillen oder Nuten können diese entsprechend der Fig. 5 gegeneinander in Umfangsrichtung versetzt oder, wie in Fig. 6 gezeigt, einander gegenüberliegend angeordnet werden, was hinsichtlich der erreichbaren Verfestigung des Tragringes 3 unterschiedliche Wirkungen mit sich bringt, so daß durch die Wahl der Rillen- oder Nutenanordnung unterschiedlichen Verhältnissen Rechnung getragen werden kann.

## Patentansprüche

1. Verfahren zum Herstellen eines Reibringes (1) für Kupplungen oder Bremsen mit einem besinterten Reibbelag (2) auf wenigstens einer Umfangsfläche eines konischen oder zylindrischen Tragringes (3), der zunächst aus einem ebenen Blech ausgestanzt und mit einem aufgesinterten Reibbelag (2) versehen wird, bevor der besinterte Tragring (3) unter gleichzeitigem Einprägen von über den Umfang verteilten Rillen oder Nuten (8) in den Reibbelag (2) durch Einprägen oder Tiefziehen zu einem konischen oder zylindrischen Reibring (1) umgeformt wird, dadurch gekennzeichnet, daß der Tragring (3) beim Einprägen der Rillen oder Nuten (8) in den Reibbelag (2) dlesen Rillen oder Nuten (8) entsprechend bis zu einer Tiefe (t) von höchstens 0,1 mm über die Länge der Rillen oder Nuten mit verformt wird und daß die Tiefe (t) der in den Tragring (3) eingeprägten Rillen oder Nuten (8) wenigstens 0,02 mm beträgt.

2. Verfahren nach Anspruch 1, dadurch gekennzeichnet, daß in den Tragring (3) auf beiden Umfangsflächen einander gegenüberliegende Rillen oder Nuten (8) eingeprägt werden.

3. Verfahren nach Anspruch 1, dadurch gekennzeichnet, daß in den Tragring (3) auf beiden Umfangsflächen in Umfangsrichtung gegeneinander versetzt Rillen oder Nuten (8) eingeprägt werden.

4. Umformwerkzeug zur Durchführung des Verfahrens nach einem der Ansprüche 1 bis 3 mit einer Matrize (5) und einem Stempel (6), von welchen Werkzeugteilen zumindest einer vorragende Prägeleisten zur Herstellung von Reibbelagrillen oder -nuten (8) trägt, dadurch gekennzeichnet, daß die Prägeleisten (7) eine die Reibbelagdicke (d) übersteigende Höhe (h) aufweisen.

## Claims

1. A method of manufacturing a friction ring (1) for clutches or brakes, the ring comprising a sintered friction lining (2) on at least one peripheral surface of a conical or cylindrical bearing ring (3) which is initially punched from a flat plate and provided with a sintered friction lining (2), before the sintered bearing ring (3) is converted by embossing or deep-drawing to a conical or cylindrical friction ring (1), with simultaneous embossing of peripherally distributed grooves or slots (8) in the friction lining (2),
characterised in that when the grooves or slots (8) are embossed in the friction lining (2), the friction ring (3) is simultaneously shaped over the length of the grooves or slots to a depth (t) of at most 0.1 mm corresponding to the grooves or slots (8) and in that the depth (t) of the grooves or slots (8) embossed in the bearing ring (3) is at least 0.02 mm.

2. A method according to claim 1, characterised in that opposite grooves or slots (8) are embossed in the bearing ring (3) on both peripheral surfaces.

3. A method according to claim 1, characterised in that grooves or slots (8) offset from one another in the peripheral direction are embossed on both peripheral surfaces of the bearing ring (3).

4. A shaping tool for working the method according to any of claims 1 to 3 comprising a die (5) and a punch (6), at least one of these tool parts bearing projecting embossing strips for producing friction-lining grooves or slots (8), characterised in that the embossing strips (7) have a height (h) greater than the thickness (d) of the friction lining.

## Revendications

1. Procédé de fabrication d'une bague de friction (1) pour embrayages ou freins, avec une garniture de friction (2) frittée, sur au moins une surface périphérique d'une bague-support (3) cylindrique ou conique, d'abord obtenue par estampage à partie d'une tôle plane et pourvue d'une garniture de friction (2) surfrittée, avant que la bague-support (3) frittée soit mise en forme, avec simultanément formage dans la garniture de friction (2) de cannelures ou rainures (8) distribuées sur la périphérie, par un emboutissage ou un emboutissage profond, pour donner une bague de friction (1) conique ou cylindrique,
caractérisé par le fait que, lors du formage dans la garniture de friction (2) des cannelures ou rainures (8), la bague support (3) est formée conjointement, sur la longueur des cannelures ou des rainures, de manière à correspondre à ces cannelures ou rainures (8), jusqu'à une profondeur (t) maximale de 0,1 mm, et la profondeur (t) des cannelures ou rainures (8) formées dans la bague-support (3) est d'au moins 0,02 mm.

2. Procédé selon la revendication 1, caractérisé par le fait que des cannelures ou rainures (8) sont formées dans la bague-support (3) à l'opposé les unes des autres, sur les deux faces périphériques.

3. Procédé selon la revendication 1, caractérisé par le fait que des cannelures ou rainures (8) sont formées dans la bague-support (3), décalées les unes par rapport aux autres, sur les deux faces périphériques.

4. Outil de formage pour mettre en oeuvre le procédé selon l'une des revendications 1 à 3, avec une matrice (5) et un poinçon (6), au moins de ces parties d'outil l'une portant des bandes d'emboutissage proéminentes servant à la fabrication dans la garniture de friction de cannelures ou de rainures (8), caractérisé par le fait que les bandes profilées (7) présentent une hauteur (h) dépassant l'épaisseur du revêtement de friction (d).
